(19) Europäisches Patentamt
European Patent Office
Office européen des brevets

(11) EP 4 510 222 A1

(12) EUROPEAN PATENT APPLICATION
published in accordance with Art. 153(4) EPC

(43) Date of publication:
**19.02.2025 Bulletin 2025/08**

(21) Application number: **22950482.4**

(22) Date of filing: **11.07.2022**

(51) International Patent Classification (IPC):
***H01M 4/36*** *(2006.01)*

(52) Cooperative Patent Classification (CPC):
**H01M 4/36;** Y02E 60/10

(86) International application number:
**PCT/CN2022/104890**

(87) International publication number:
**WO 2024/011350 (18.01.2024 Gazette 2024/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
- **BAI, Wenlong**
  **Ningde, Fujian 352100 (CN)**
- **WU, Yiyang**
  **Ningde, Fujian 352100 (CN)**
- **YE, Yonghuang**
  **Ningde, Fujian 352100 (CN)**
- **YOU, Xingyan**
  **Ningde, Fujian 352100 (CN)**
- **WU, Baozhen**
  **Ningde, Fujian 352100 (CN)**
- **WU, Kai**
  **Ningde, Fujian 352100 (CN)**

(74) Representative: **Kraus & Lederer PartGmbB**
**Thomas-Wimmer-Ring 15**
**80539 München (DE)**

# (54) COMPOSITE MATERIAL AND PREPARATION METHOD THEREFOR, ELECTRODE, SECONDARY BATTERY AND ELECTRIC DEVICE

(57) The present application provides a composite material, comprising: a negative electrode active material, a dielectric material particle and a binder resin; wherein at least a part of a surface of the dielectric material particle is covered with a coupling agent that bridges the dielectric material particle and the binder resin.

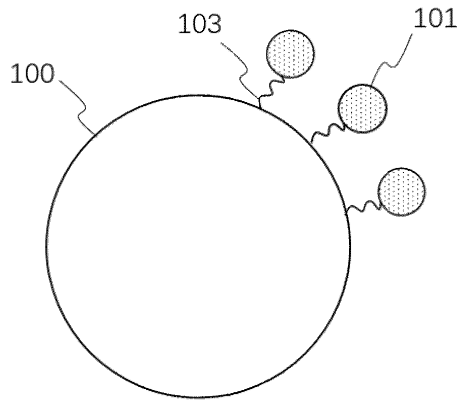


FIG. 3



Processed by Luminess, 75001 PARIS (FR)

## Description

### Technical Field

The present application relates to the technical field of batteries, and in particular to a composite material and a method for preparing the same, as well as an electrode, a second battery, and an electrical apparatus thereof.

### Background

In recent years, with the increasingly wide use of secondary batteries, the secondary batteries are widely used in energy storage power systems such as water power, thermal power, wind power and solar power stations, as well as power tools, electric bicycles, electric motorcycles, electric vehicles, military equipment, aerospace and other fields. Due to the great development of the secondary batteries, higher requirements have also been put forward for their energy density, cycling performances and the like.

During the working process of lithium-ion batteries, there is a risk of forming a lithium dendrite on a negative electrode. Since the conductivity of the lithium dendrite is much higher than that of a negative electrode plate, lithium ions will preferentially gather at the end of lithium dendrite, resulting in macroscopic lithium plating. The macroscopic lithium plating will bypass a separator and form a micro-short circuit with a positive electrode, causing problems such as storage, self-discharge, current leakage, etc.; and will even puncture the separator, resulting in serious problems such as short circuit.

### Summary of the Invention

In view of the aforementioned problems, the present application provides a novel composite material and a method for prepraing the same, an electrode, a secondary battery and an electrical apparatus, which will be described respectively hereafter.

In a first aspect, the present application provides a composite material, including:

a negative electrode active material;
a dielectric material particle; and
a binder;
wherein, at least a part of a surface of the dielectric material particle is covered with a coupling agent that bridges the dielectric material particle and the binder.

The dielectric material particle in the composite material of the present application is bridged on a binder resin through a coupling agent, which can bring about the following beneficial effects.

(1) The dielectric material particles are evenly dispersed in an electrode slurry and will not all settle at the bottom of the slurry.
(2) The dielectric material particles can be bonded to a surface of the negative electrode active material through the binder, and have a relatively closer distance from the surface of the negative electrode active material, so that it can fully exert a modification effect.

Taking a lithium-ion battery as an example, due to the intercalation of lithium ions in the negative electrode active material of the lithium-ion battery during a fast charge process, the difference in the desolvation rate of solvated lithium at a SEI film interface will lead to a wide concentration gradient distribution. The enrichment of lithium ions at the interface between the SEI film and the negative electrode will lead to excessive local lithium content. When the enrichment amount of lithium ions exceeds the intercalated amount of lithium ions, the lithium ions will bind with electrons to cause local lithium dendrites in the negative electrode. Since the conductivity of the lithium dendrites is much higher than that of the negative electrode plate, the subsequent lithium ions will preferentially gather at the end of lithium dendrites, and then cause macroscopic lithium plating, which will bypass the separator and form a micro-short circuit with the positive electrode, causing problems such as storage, self-discharge, current leakage, etc.; and will even puncture the separator, resulting in serious problems such as short circuit. A high dielectric-constant material, of which the dielectric constant is similar to that of an electrolyte solution, is beneficial to reduce a desolvation barrier, improve the desolvation level of lithium, and improve the fast charge performance. As affected by an electric field, such a material will generate a reverse electric field, so that a thin SEI film is produced at an interface of three phases of the dielectric-constant material, graphite or silicon and a solvent, so as to reduce the loss of active lithium and meanwhile shorten a migration path of the lithium ions in the SEI film, thereby improving a fast charge performance and reducing the consumption of the electrolyte solution.

The composite material of the present application is used for a negative electrode of a secondary battery, so that the secondary battery can exhibit one or more of the following improved performances: increased specific capacity, increased first-week coulombic efficiency, and improved fast charge cycle life.

(3) The negative electrode active material will expand/shrink in volume during the charging and discharging process. During such a process, since the dielectric material particles are bridged on the binder resin, the dielectric material particles will not be fallen off along with the expand/shrink of the negative electrode active material, and will not lose contact with the negative electrode active material. The dielectric material particles can maintain stable contact with the negative electrode active material during the working process of the battery, and thus can stably exert a modification effect.

In some embodiments, the binder binds the dielectric material particle onto the negative electrode active material.

In some embodiments, the dielectric material particle has a relative dielectric constant of 80 to 200. Based on this scheme, the relative dielectric constant of the dielectric material particle is relatively closer to that of the electrolyte solution, and thus the fast charge performance is better.

In some embodiments, the dielectric material is selected from one or more of the following: barium titanate, lead titanate, lithium niobate, lead zirconate titanate, lead metaniobate and lead barium lithium niobate.

In some embodiments, the binder is an organic binder.

In some embodiments, the binder is selected from one or more of the following: polyacrylic acid (PAA), styrene butadiene rubber (SBR), polyamide-imide (PAI), polyvinyl alcohol (PVA), polyethyleneimine (PEI), a polyimide binder (PI), and polytert-butyl acrylate-triethoxyvinylsilane (TBATEVS).

In some embodiments, the coupling agent is selected from one or more of the following: a silane coupling agent and a titanate coupling agent.

In some embodiments, the coupling agent is selected from one or more of a silane coupling agent KH590, a silane coupling agent KH550, a silane coupling agent KH560, a silane coupling agent KH570, a silane coupling agent KH792, a silane coupling agent DL602, a silane coupling agent DL171, a chelated type 100 titanate coupling agent, and a chelated type 200 titanate coupling agent.

In some embodiments, the coupling agent is linked to the dielectric material through a first terminal functional group, and the first terminal functional group includes -O-.

In some embodiments, the coupling agent is linked to the binder through a second terminal functional group, and the second terminal functional group includes -S-.

In some embodiments, the coupling agent is linked to the dielectric material through a first terminal functional group, and the first terminal functional group includes -Si-O-.

In some embodiments, the coupling agent is linked to the binder through a second terminal functional group, and the second terminal functional group includes -C-S-.

In some embodiments, the binder has a number average molecular weight of 1 million to 2 million.

In some embodiments, the dielectric material particle is a zero-dimensional particle.

In some embodiments, the dielectric material particle is a tetragonal barium titanate particle.

In some embodiments, the dielectric material particle has a median particle diameter by volume of 50 nm-200 nm. Based on this, the dielectric material particle can well bind with the negative electrode active material, and thus the dielectric material particle is not easy to fall off from the surface of the negative electrode active material.

In some embodiments, the negative electrode active material has a median particle diameter by volume of 4-10 μm. Based on this, the dielectric material can adhere well to the surface of the negative electrode active material and thus is not easy to fall off.

In some embodiments, a ratio of median particle diameter by volume of the negative electrode active material to the dielectric material particle is 200:1-20:1. Based on this, the dielectric material easily adheres to the surface of the negative electrode active material and thus is not easy to fall off.

In some embodiments, a mass ratio of the dielectric material to the binder is 0.1:100-1:100.

In a second aspect, the present application provides a method for preparing a composite material, the composite material being the composite material described in any one of the above;

The preparation method includes:

(1) subjecting a dielectric material particle to hydroxylation treatment to obtain a hydroxylated dielectric material particle;

(2) grafting a coupling agent on the hydroxylated dielectric material particle to obtain a dielectric material particle grafted with the coupling agent;

(3) linking the coupling agent grafted on the dielectric material particle to a binder through a condensation reaction; and

(4) mixing the product from the previous step with a negative electrode active material.

In some embodiments, in the step (3), the coupling agent on the dielectric material particle contains a mercapto end group, the binder contains an alkenyl end group, and the coupling agent is linked to the binder via a mercapto-alkenyl click chemical reaction.

In some embodiments, the mercapto-alkenyl click chemical reaction is conducted under the action of a photoinitiator and ultraviolet light.

In a third aspect, an electrode is provided, which includes the composite material described in any one of the above.

In a fourth aspect, the present application provides a secondary battery including the electrode of any one of the above.

In a fifth aspect, the present application provides an electrical apparatus including the aforementioned secondary battery.

Beneficial effects

One or more implementations of the present application have the following one or more beneficial effects:

(1) when the composite material is used in the electrode of the secondary battery, the secondary battery exhibits improved negative electrode capacity;
(2) when the composite material is used in the electrode of the secondary battery, the secondary battery exhibits improved first-week coulombic efficiency;
(3) when the composite material is used in the electrode of the secondary battery, the secondary battery exhibits reduced charging resistance; and
(4) when the composite material is used in the electrode of the secondary battery, the secondary battery exhibits a longer cycle life.

**Description of Drawings**

Fig. 1 is a schematic view of a styrene butadiene rubber-barium titanate particle composite according to an embodiment of the present application.
Fig. 2 is an infrared spectrogram of the styrene butadiene rubber-barium titanate particle composite, styrene butadiene rubber, and barium titanate particles according to an embodiment of the present application.
Fig. 3 is a schematic view of a composite material according to an embodiment of the present application.
Fig. 4 is a schematic view of a adhesive force test according to an embodiment of the present application.
Fig. 5 is a schematic view of a secondary battery according to an embodiment of the present application.
Fig. 6 is an exploded view of the secondary battery according to an embodiment of the present application shown in Fig. 5.
Fig. 7 is a schematic view of a battery module according to an embodiment of the present application.
Fig. 8 is a schematic view of a battery pack according to an embodiment of the present application.
Fig. 9 is an exploded view of the battery pack according to an embodiment of the present application shown in Fig. 8.
Fig. 10 is a schematic view of an electrical apparatus in which a secondary battery is used a power source according to an embodiment of the present application.

Description of reference numerals:
1 battery pack; 2 upper box body; 3 lower box body; 4 battery module; 5 secondary battery; 51 case; 52 electrode assembly; 53 top cover assembly; 100 negative electrode active material; 101 dielectric material particle; 103 binder; 510 steel plate; 520 double-sided adhesive tape; 530 electrode plate to be tested.

**Detailed Description**

Hereinafter, the embodiments of the negative electrode active material and the preparation method thereof, the positive electrode plate, the negative electrode plate, the secondary battery, the battery module, the battery pack and the apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary verbosity in the following description and facilitate the understanding of those skilled in the art. In addition, the drawings and subsequent descriptions are provided for those skilled in the art to fully understand

the present application, and are not intended to limit the subject matter recited in the claims.

A "range" disclosed in the present application is defined in the form of a lower limit and an upper limit, with a given range being defined by the selection of a lower limit and an upper limit, and the selected lower and upper limits defining the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

If not specifically stated, "including" and "comprising" mentioned in the present application indicate open inclusion or closed inclusion. For example, the "including" and "comprising" may indicate that it may further include or comprise other components not listed, and it may include or comprise only the listed components.

Unless otherwise specified, the term "or" is inclusive in the present application. By way of example, the phrase "A or B" means "A, B, or both A and B". More particularly, the condition "A or B" is satisfied by any one of the following conditions: A is true (or present) and B is false (or absent); A is false (or absent) and B is true (or present); or both A and B are true (or present).

[Secondary battery]

Secondary batteries, also known as rechargeable batteries or storage batteries, refer to batteries that, after being discharged, can activate active materials by charging for continuous use.

Generally, the secondary battery includes a positive electrode plate, a negative electrode plate, a separator and an electrolyte solution. During the charging and discharging process of the battery, active ions (e.g., lithium ions) are intercalated and deintercalated back and forth between the positive electrode plate and the negative electrode plate. The separator is arranged between the positive electrode plate and the negative electrode plate, which mainly plays a role in preventing the short circuit between the positive and negative electrodes, and meanwhile allowing the active ions to pass through. The electrolyte solution mainly plays the role of conducting the active ions between the positive electrode plate and the negative electrode plate.

[Composite material]

In a first aspect, the present application provides a composite material, including:

a negative electrode active material;
a dielectric material particle; and
a binder;
wherein, at least a part of a surface of the dielectric material particle is covered with a coupling agent that bridges the dielectric material particle and the binder.

The dielectric material particle in the composite material of the present application is bridged on a binder resin through a coupling agent, which can bring about the following beneficial effects.

(1) The dielectric material particles are evenly dispersed in an electrode slurry and will not all settle at the bottom of the slurry.

(2) The dielectric material particles can be bonded to a surface of the negative electrode active material through the binder, and have a relatively closer distance from the surface of the negative electrode active material, so that it can fully exert a modification effect.

(3) The negative electrode active material will expand/shrink in volume during the charging and discharging process. During such a process, since the dielectric material particles are bridged on the binder resin, the dielectric material particles will not be fallen off along with the expand/shrink of the negative electrode active material, and will not lose contact with the negative electrode active material. The dielectric material particles can maintain stable contact with the negative electrode active material during the working process of the battery, and thus can stably exert a modification effect.

In some embodiments, the term "bridging" refers to that one end of the coupling agent is linked to the dielectric material particle and the other end is linked to the binder by a chemical bond.

In some embodiments, in some embodiments, the term "connecting" refers to connecting by a chemical bond, for example by an ionic bond or a covalent bond.

In some embodiments, the coupling agent is bonded to the dielectric material particle by a chemical bond.

In some embodiments, the coupling agent is bonded to the binder by a chemical bond.

The term "coupling agent" refers to a substance that can be linked to the dielectric material and the binder, respectively. The "coupling agent" can have two functional groups with different properties, for example, one being a functional group with affinity to an inorganic substance, which is easy to chemically react with a surface of the inorganic substance; and for example, the other being an agent with affinity to an organic substance, which can chemically react with a synthetic resin or other polymers, physically entangle with the same or form hydrogen bonds to dissolve in them.

In some embodiments, the binder binds the dielectric material particle onto the negative electrode active material.

In some embodiments, the dielectric material particle has a relative dielectric constant of 80 to 200 (e.g., 80, 90, 100, 110, 120, 130, 140, 150, 160, 170, 180, 190 or 200).

In some embodiments, the dielectric material is selected from one or more of the following: barium titanate, lead titanate, lithium niobate, lead zirconate titanate, lead metaniobate and lead barium lithium niobate.

In some embodiments, lead zirconate titanate has a general chemical formula of $Pb_xZr_{1-x}TiO_3$, wherein $0 < x < 1$.

In some embodiments, lead barium lithium niobate has a general chemical formula of $(Pb_xBa_{1-x})_4Li_2Nb_{10}O_{30}$, wherein $0 < x < 1$.

In some embodiments, the binder is an organic binder.

In some embodiments, the binder has one or more (e.g., one, two or three) selected from the monomer units represented by formulas 1, 2 and 3;

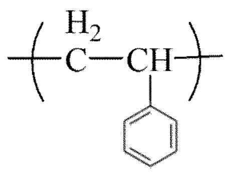

formula 1

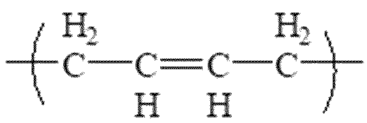

formula 2

, and

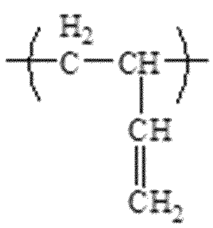

formula 3.

In some embodiments, the binder is selected from one or more of the following: polyacrylic acid (PAA), styrene butadiene rubber (SBR), polyamide-imide (PAI), polyvinyl alcohol (PVA), polyethyleneimine (PEI), a polyimide binder (PI),

and polytert-butyl acrylate-triethoxyvinylsilane (TBATEVS).

In some embodiments, the coupling agent is selected from one or more of the following: a silane coupling agent and a titanate coupling agent.

In some embodiments, the coupling agent is selected from one or more of a silane coupling agent KH590, a silane coupling agent KH550, a silane coupling agent KH560, a silane coupling agent KH570, a silane coupling agent KH792, a silane coupling agent DL602, a silane coupling agent DL171, a chelated type 100 titanate coupling agent, and a chelated type 200 titanate coupling agent.

In some embodiments, the coupling agent is a silane coupling agent with a general formula of RSiX3, wherein R represents groups such as amino, mercapto, vinyl, epoxy, cyano and methacryloxy groups, which groups all have strong reactivity with different matrix resins, and X represents a hydrolyzable alkoxy group (e.g., methoxy, ethoxy, etc.). The silane coupling agent is one or more of KH550, KH560, KH590, KH570, KH792, DL602, and DL171.

In some embodiments, the coupling agent is a chelated titanate coupling agent. Specifically, it can be one or more of chelated type 100 and type 200. The chelated type 100 is a titanate coupling agent containing an oxyacetic acid chelating group, and the chelated type 200 is a titanate coupling agent containing an ethylene glycol chelating agent. The chelated type 100 titanate coupling agent is, for example, bis(octyl pyrophosphate)oxyacetate titanate CTDPP-138S (KR-138S). The chelated type 200 titanate coupling agent is, for example, ethylene glycol bis(dioctyl phosphate)titanate ETDOP-212S (KR-212S).

In some embodiments, the coupling agent is selected from one or more of a silane coupling agent KH590, a silane coupling agent KH550, a silane coupling agent KH560, a silane coupling agent KH570, a silane coupling agent KH792, a silane coupling agent DL602, a silane coupling agent DL171, a chelated type 100 titanate coupling agent, and a chelated type 200 titanate coupling agent.

In some embodiments, the coupling agent is linked to the dielectric material through a first terminal functional group, and the first terminal functional group includes -O-.

In some embodiments, the coupling agent is linked to the binder through a second terminal functional group, and the second terminal functional group includes -S-.

In some embodiments, the coupling agent is linked to the dielectric material through a first terminal functional group, and the first terminal functional group includes -Si-O-.

In some embodiments, the coupling agent is linked to the binder through a second terminal functional group, and the second terminal functional group includes -C-S-.

In some embodiments, the binder has a number average molecular weight of 1 million to 2 million, for example 1.3 million to 1.7 million, e.g., 1.5 million.

In some embodiments, that term "number average molecular weight" refers to a common arithmetic mean of the molecular weight of each polymer.

In some embodiments, the dielectric material particle is a zero-dimensional particle. The zero-dimensional material refers to a point-like material that is in a nanoscale range (1-100 nm, for example 1-50 nm, e.g., 1-10 nm) in three dimensions.

In some embodiments, the dielectric material particle is a tetragonal barium titanate particle.

In some embodiments, the dielectric material particle has a median particle diameter by volume of 50 nm-200 nm, for example 50 nm-100 nm, 100 nm-150 nm, and 150 nm-200 nm. The advantage of the median particle diameter by volume of the dielectric material particle being in the aforementioned range is that it is easy to be mixed with the negative electrode active material such as graphite and is not easy to fall off from the surface of graphite.

In some embodiments, that term "median particle diameter by volume" Dv50 refers to a particle diameter corresponding to 50% of the volume in terms of cumulative particle distribution ordered from a minimum dimension to a maximum dimension. The "median particle diameter by volume" can be obtained by observing and measuring with a scanning electron microscope, or by measuring with a laser diffraction method.

In some embodiments, the negative electrode active material has a median particle diameter by volume of 4-10 μm.

In some embodiments, a ratio of median particle diameter by volume of the negative electrode active material to the dielectric material particle is 200:1-20:1, for example 200:1-150:1, 150:1-100:1, 100:1-50:1, and 50:1-20:1. The advantage of the ratio of median particle diameter by volume of the negative electrode active material to the dielectric material particle being in the aforementioned range is that the dielectric material is easy to adhere onto the surface of graphite and is not easy to fall off.

In some embodiments, a mass ratio of the dielectric material to the binder is 0.1:100-1:100 (e.g., 0.1:100-0.2:100, 0.2:100-0.3:100, 0.3:100-0.4:100, 0.4:100-0.5:100, 0.5:100-0.6:100, 0.6:100-0.7:100, 0.7:100-0.8:100, 0.8:100-0.9:100, and 0.9:100-1:100).

In some embodiments, that term "zero-dimensional" refers to a particle state in which a particle has a very small size has substantially no length, e.g., a particle in a nanoparticle state. In contrast to the term "zero-dimensional", the term "three dimensional" refers to a bulk-volume state with a volume, the term "two-dimensional" refers to a thin film state, and

the term "one-dimensional" refers to a nanotube state.

In some embodiments, the term "zero-dimensional" may refer to a particle having a diameter from 1 nm to about 100 nm (1-10 nm, 10-20 nm, 20-30 nm, 30-40 nm, 40-50 nm, 50-60 nm, 60-70 nm, 70-80 nm, 80-90 nm, and 90-100 nm).

In some embodiments, that term "tetragonal crystalline form" denotes a crystalline structure having a unit cell including three axes, wherein two axes have the same length and are at right angles to each other, and the third axis is perpendicular to the other two axes.

In some embodiments, that term "relative dielectric constant" refers to a relative dielectric constant ($\varepsilon_r$) which is obtained by diving a relative dielectric constant of a material by a relative dielectric constant at vacuum ($\varepsilon_0$).

In some embodiments, the dielectric constant refers to a dielectric constant at room temperature (25 $\pm$ 5°C.), which has a well-known meaning in the art and can be tested with instruments and methods known in the art. For example, a ferroelectric material can be prepared into a circular specimen and then tested for a capacitance C with an LCR tester, and a dielectric constant is calculated according to the formula: dielectric constant $\varepsilon = (C \times d)/(\varepsilon_0 \times A)$. C represents the capacitance in farad (F); d represents the thickness of the specimen in cm; A represents the area of the specimen in $cm^2$; $\varepsilon_0$represents a vacuum dielectric constant $\varepsilon_0 = 8.854 \times 10\text{-}14$ F/cm. In the present application, the test conditions may be 1 KHz, 1.0 V, and 25 $\pm$ 5°C. The test standard can be according to GB/T 11297.11-2015. When a specimen is prepared, reference may be made to Chinese patent application CN114217139A.

In some embodiments, the relative dielectric constant of the present application can be determined by a relative dielectric constant tester, specifically referring to GB/T5594.4-1985, and the instrument can be selected from a ZJD-C relative dielectric constant tester available from Beijing Zhonghang Times Instrument Equipment Co., Ltd.

**In** a second aspect, the present application provides a method for preparing a composite material, the composite material being the composite material described in any one of the above;

The preparation method includes:

(1) subjecting a dielectric material particle to hydroxylation treatment to obtain a hydroxylated dielectric material particle;
(2) grafting a coupling agent on the hydroxylated dielectric material particle to obtain a dielectric material particle grafted with the coupling agent;
(3) linking the coupling agent grafted on the dielectric material particle to a binder through a condensation reaction; and
(4) mixing the product from the previous step with a negative electrode active material.

**In** some embodiments, in the step (3), the coupling agent on the dielectric material particle contains a mercapto end group, the binder contains an alkenyl end group, and the coupling agent is linked to the binder via a mercapto-alkenyl click chemical reaction.

**In** some embodiments, the mercapto-alkenyl click chemical reaction is conducted under the action of a photoinitiator and ultraviolet light.

**In** a third aspect, an electrode is provided, which includes the composite material described in any one of the above.

**In** a fourth aspect, the present application provides a secondary battery including the electrode of any one of the above.

**In** a fifth aspect, the present application provides an electrical apparatus including the aforementioned secondary battery.

[Negative electrode plate]

The negative electrode plate includes a negative-electrode current collector and a negative-electrode film layer arranged on at least one surface of the negative-electrode current collector, wherein the negative-electrode film layer includes a negative electrode active material, and the negative electrode active material is any one of the negative electrode active materials of the present application.

As an example, the negative-electrode current collector has two opposite surfaces in its own thickness direction, and the negative-electrode film layer is arranged on either or both of the opposite surfaces of the negative-electrode current collector.

In some embodiments, the negative-electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on the high molecular material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art can be used as the negative electrode active material. As an example, the negative electrode active material may include at least one of the following materials: artificial graphite, natural graphite, soft carbon, hard carbon, silicon-based materials, tin-based materials, lithium titanate, and the like. The silicon-based material can be at least one selected from elemental silicon, a silicon oxide compound, a silicon-carbon composite, a silicon-nitrogen composite, and a silicon alloy. The tin-based material may be at least one selected from elemental tin, a tin oxide compound, and a tin alloy. However, the present application is not limited to these materials, and other conventional materials useful as negative electrode active materials for batteries can also be used. These negative electrode active materials may be used alone or in combination of two or more thereof.

In some embodiments, the negative-electrode film layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative-electrode film layer may further optionally include a conductive agent. As an example, the conductive agent may be selected from at least one of superconducting carbon, acetylene black, carbon black, Ketjen black, carbon dot, carbon nanotubes, graphene, and carbon nanofibers.

In some embodiments, the negative-electrode film layer may further optionally include other adjuvants, for example, a thickener (e.g., sodium carboxymethylcellulose (CMC-Na)) and the like.

In some embodiments, the negative electrode plate can be prepared by: dispersing the aforementioned components for preparing the negative electrode plate, e.g., the negative electrode active material, the conductive agent, the binder and any other components in a solvent (e.g., \deionized water) to form a negative electrode slurry; and coating the negative electrode slurry on a negative-electrode current collector, followed by oven drying, cold pressing and the like procedures, to obtain the negative electrode plate.

[Positive electrode plate]

In some embodiments, the positive electrode plate typically includes a positive-electrode current collector and a positive-electrode film layer arranged on at least one surface of the positive-electrode current collector, wherein the positive-electrode film layer includes a positive electrode active material.

As an example, the positive-electrode current collector has two opposite surfaces in its own thickness direction, and the positive-electrode film layer is arranged on either or both of the opposite surfaces of the positive-electrode current collector.

In some embodiments, the positive-electrode current collector can be a metal foil or a composite current collector. For example, as the metal foil, aluminum foil can be employed. The composite current collector may include a high molecular material substrate layer and a metal layer formed on at least one surface of the high molecular material substrate. The composite current collector can be formed by forming a metal material (aluminum, aluminum alloy, nickel, nickel alloy, titanium, titanium alloy, silver and silver alloy, etc.) on the high molecular material substrate (e.g., polypropylene (PP), polyethylene terephthalate (PET), polybutylene terephthalate (PBT), polystyrene (PS), polyethylene (PE), etc.).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Here, examples of the lithium transition metal oxide may include, but are not limited to, at least one of a lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/5}n_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium-nickel-cobalt-aluminum oxide (such as $LiNi_{0.85}Co_{0.15}Al_{0.05}O_2$) and modified compounds thereof. Examples of the lithium-containing phosphate with an olivine structure may include, but are not limited to, at least one of lithium iron phosphate (such as $LiFePO_4$ (also abbreviated as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive-electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a

tetrafluoroethylene-hexafluoropropylene copolymer and a fluorine-containing acrylate resin.

In some embodiments, the positive-electrode film layer may further optionally include a conductive agent. As an example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by: dispersing the aforementioned components for preparing the positive electrode plate, e.g., the positive electrode active material, the conductive agent, the binder and any other components in a solvent (e.g., N-methyl pyrrolidone) to form a positive electrode slurry; and coating the positive electrode slurry on a positive electrode current collector, followed by oven drying, cold pressing and the like procedures, to obtain the positive electrode plate.

[Electrolyte]

The electrolyte plays the role of conducting ions between the positive electrode plate and the negative electrode plate. The type of the electrolyte is not particularly limited in the present application, and can be selected according to requirements. For example, the electrolyte may be in a liquid state, a gel state, or an all-solid state.

In some embodiments, the electrolyte is in a liquid state, and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent can be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone and ethyl sulfonyl ethane.

In some embodiments, the electrolyte solution further optionally comprises an additive. As an example, the additive may include a negative-electrode film-forming additive, or a positive-electrode film-forming additive, or may include an additive that capable of improving some performances of the battery, e.g., an additive for improving the overcharge performance of the battery, an additive for improving the high-temperature performance or low-temperature performance of the battery, and the like.

[Separator]

In some embodiments, the secondary battery further includes a separator. The present application has no particular limitation on the types of the separator, and any well-known separator of a porous structure with good chemical stability and mechanical stability can be selected for use.

In some embodiments, the material of the separator can be selected from at least one of a glass fiber, non-woven cloth, polyethylene, polypropylene and polyvinylidene fluoride. The separator may be a single-layer film or a multi-layer composite film, and is not particularly limited. When the separator is a multi-layer composite thin film, the material of each layer may be the same or different, and there is no particular limitation on it.

In some embodiments, the positive electrode plate, the negative electrode plate and the separator can be made into an electrode assembly by a winding process or a stacking process.

In some embodiments, the secondary battery may include an outer package. The outer package can be used for encapsulating the aforementioned electrode assembly and the electrolyte.

In some embodiments, the outer package of the secondary battery may be a hard housing, such as a hard plastic housing, an aluminum housing, a steel housing, etc. The outer package of the secondary battery may also be a soft package, such as a bag-type soft package. The material of the soft package can be plastic, and as the plastic, polypropylene, polybutylene terephthalate, polybutylene succinate and the like can be listed.

The present application has no particular limitation on the shape of the secondary battery, which can be cylindrical, square or any other shape. For example, Fig. 5 shows a secondary battery 5 with a square structure as an example.

In some embodiments, referring to Fig. 6, the outer package may include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate and the separator can be subjected to a winding or stacking process to form an electrode assembly 52. The electrode assembly 52 is encapsulated in the accommodating cavity. The electrode assembly 52 is soaked in the electrolyte solution. The number of the electrode assemblies 52 included in the secondary battery 5 can be

one or more, which can be selected by those skilled in the art according to specific practical requirements.

In some embodiments, the secondary batteries can be assembled into a battery module, and the number of the secondary batteries included in the battery module can be one or more, and the specific number can be selected by those skilled in the art according to the application and capacity of the battery module.

Fig. 7 shows a battery module 4 as an example. Referring to Fig. 7, in the battery module 4, multiple secondary batteries 5 may be sequentially arranged along a length direction of the battery module 4. Of course, they can also be arranged in any other way. The plurality of secondary batteries 5 may further be fixed by fasteners.

Optionally, the battery module 4 may further include a shell having an accommodating space in which the multiple secondary batteries 5 are accommodated.

In some embodiments, the aforementioned battery module may further be assembled into a battery pack, the number of battery modules contained in the battery pack may be one or more, and the specific number can be selected by those skilled in the art according to the use and capacity of the battery pack.

Figs. 8 and 9 show a battery pack 1 as an example. Referring to Figs. 8 and 9, the battery pack 1 can include a battery box and a plurality of battery modules 4 provided in the battery box. The battery box includes an upper box body 2 and a lower box body 3, and the upper box body 2 can cover the lower box body 3 to form a closed space for accommodating the battery modules 4. The plurality of battery modules 4 may be arranged in the battery box in any manner.

Additionally, the present application further provides an electrical apparatus including at least one of the secondary battery, the battery module, or the battery pack provided by the present application. The secondary battery, the battery module, or the battery pack can be used as a power source for the electrical apparatus, or as an energy storage unit for the electrical apparatus. The electrical apparatus may include, but is not limited to, a mobile device (e.g., a mobile phone, and a laptop, etc.), an electric vehicle (e.g., an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

The secondary battery, the battery module, or the battery pack can be selected as the electrical apparatus according to the use requirements of the electrical apparatus.

Fig. 10 is an example of electrical apparatus. The electrical apparatus is a all-electric vehicle, a hybrid electric vehicle or a plug-in hybrid electric vehicle, and the like. In order to satisfy the requirements of the electrical apparatus for high power and high energy density of the secondary battery, the battery pack or battery module can be employed.

Examples of the present application will be described hereinafter. The following examples are illustrative and only for explaining the present application, and should not be construed as limiting the present application. If no specific technology or condition is indicated in the examples, it should be carried out according to the technology or condition described in the literature in the art or according to product instructions. All of the used agents or instruments which are not specified with the manufacturer are conventional commercially-available products.

Example 1:

100 g of a dielectric material particle (barium titanate particle, of a tetragonal crystal form) was taken and added into 1 L of a $H_2O_2$ solution (with a concentration of $H_2O_2$ of 3%), then added with 50 ml of an ammonium chloride solution, and heated under stirring at a reflux temperature of 90°C for 3 hours to obtain a hydroxyl-modified barium titanate particle.

100 g of the hydroxyl-modified barium titanate particle was taken and immersed into an ethanol aqueous solution (with a volume ratio of ethanol to water of 8:1), added with 10 ml of a coupling agent (γ-mercaptopropyltrimethoxysilane), heated to 50°C, and reacted for 4 h to obtain a barium titanate particle grafted with the coupling agent.

200 g of a binder (styrene butadiene rubber, with a number average molecular weight of 1.5 million) copolymer was dissolved in 1 L of DMF, stirred ultrasonically, added with 10 g of the barium titanate particle grafted with the coupling agent, and then added with 9 g of benzoin dimethyl ether to obtain a mixture. The aforementioned mixture was irradiated with an ultraviolet lamp with a wavelength of 360 nm for 30 min, and then heated at 30°C until DMF was volatilized to obtain a styrene butadiene rubber-barium titanate particle composite.

In the styrene butadiene rubber-barium titanate particle composite (abbreviated as SBR-BTO), at least part of the surface of the barium titanate particle was covered with γ-mercaptopropyltrimethoxysilane, and the γ-mercaptopropyltrimethoxysilane bridged the titanium barium acid particle and the styrene butadiene rubber.

Fig. 1 showed a schematic view of the styrene butadiene rubber-barium titanate particle composite. As shown in the figure, at least a part of the surface of the dielectric material particle 101 was covered with a coupling agent 102, and the coupling agent 102 bridged the dielectric material particle 101 and the binder 103.

Fig. 2 showed an infrared spectrogram of the barium titanate particle grafted with the styrene butadiene rubber (BTO-SBR). It could be seen from the figure that absorption peaks of Si-C and Si-O were observed at wavenumbers of 1,200 and 1,100 $cm^{-1}$, which could prove that γ-mercaptopropyltrimethoxysilane bridged the barium titanate particle and the styrene butadiene rubber together.

The negative electrode active material (artificial graphite), the conductive agent (acetylene black), the barium titanate particle grafted with the styrene butadiene rubber (abbreviated as SBR-BTO) and a dispersant (sodium carboxymethyl cellulose, abbreviated as CMC) were mixed according to a weight ratio of 97:1:1:1, to obtain the composite material of Example 1. The composite material was subsequently used for preparing the negative electrode slurry of a lithium-ion battery. The ratio of median particle diameter by volume of the negative electrode active material to the dielectric material particle was controlled to be 50:1. That was, the volume average particle diameter of the negative electrode active material in Example 1 was 2.5 μm.

Fig. 3 showed a schematic view of the composite material. As shown in the figure, the composite material included a negative electrode active material 100, a dielectric material particle 101 and a binder 103, and the binder 103 bound the dielectric material particle 101 onto the negative electrode active material 100. As shown in Fig. 3, a composite material with a "chain spherical structure" was prepared in the aforementioned scheme of the present application. By connecting the binder 103 with the dielectric material particle 101 through a mercapto group, the hydroxyl group on the surface of the binder 103 could be connected with the surface of the negative electrode active material 100 through a hydrogen bond, so that the dielectric material particles 101 could be uniformly distributed on the surface of the negative electrode active material 100. Meanwhile, this composite material was connected in a point-to-face manner at the end of negative electrode, which improved the utilization rate of the high dielectric-constant material, fully exerted the desolvation effect thereof and the performance of thin SEI, and did not block the migration channel of lithium ions. It should be noted that what was shown in Fig. 3 was only a schematic view for the convenience of presenting the connection relationship, and the dimensional relationship shown in FIG. 3 did not represent the real dimensional relationship.

The ratio of raw material components (artificial graphite, acetylene black, SBR-BTO, CMC) for preparing the composite material, the ratio of SBR to BTO in SBR-BTO, the median particle diameter by volume Dv50 and the relative dielectric constant of barium titanate, and the number average molecular weight of SBR in Example 1 were as shown in Table 1.

Examples 2-15

The difference between Examples 2-15 and Example 1 is that the raw material parameters or process parameters for preparing the composite material were different. The specific parameter differences are shown in Table 1.

Example 11 replaced barium titanate (BTO) of Example 1 with lead titanate (PTO).

Example 12 replaced barium titanate (BTO) of Example 1 with lithium niobate (PPLN).

Example 13 replaced barium titanate (BTO) of Example 1 with lead zirconate titanate (PZT).

Example 14 employed a chelated type 100 titanate coupling agent (CTDPP-138S) to bridge the dielectric material particle and the binder, so as to replace the γ-mercaptopropyltrimethoxysilane of Example 1.

Example 15 employed a chelated type 200 titanate coupling agent (ETDOP-212S) to bridge the dielectric material particle and the binder, so as to replace the γ-mercaptopropyltrimethoxysilane of Example 1.

Comparative Example 1

The difference between Comparative Example 1 and Example 1 was that the formulation of the composite material was different. The composite material of Comparative Example 1 did not contain the dielectric material particle BTO. The formulation of the composite material of Comparative Example 1 was as follows: the negative electrode active material (artificial graphite), the conductive agent (acetylene black), the styrene butadiene rubber and the dispersant (sodium carboxymethyl cellulose) were mixed according to a weight ratio of 97:1:1:1.

Comparative Example 2

The difference between Comparative Example 2 and Example 1 was that the formulation of the composite material was different. The composite material of Comparative Example 2 did not contain the dielectric material particle BTO. The formulation of the composite material of Comparative Example 2 was as follows: the negative electrode active material (artificial graphite), the conductive agent (acetylene black), the styrene butadiene rubber, the dielectric material particles (barium titanate particles) and the dispersant (sodium carboxymethyl cellulose) were mixed according to a weight ratio of 97:1:0.95::0.05:1.

Preparation of total battery

(1) Preparation of negative electrode plate: the composite materials of the aforementioned examples and comparative examples were added into deionized water respectively, stirred and mixed evenly to prepare a negative electrode slurry. Then, the negative electrode slurry was coated on a copper foil of 7 μm as a negative-electrode current collector, oven-dried, cold-pressed and slitted to obtain a negative electrode plate with a negative electrode film layer, wherein the negative electrode film layer had an area density of 9.7 $mg/cm^2$.

(2) Preparation of positive electrode plate: lithium nickel cobalt manganese oxide (NCM523, i.e. $LiNi_{0.5}Co_{0.2}Mn_{0.3}O_2$) as a positive electrode active material, polyvinylidene fluoride PVDF, acetylene black SP as a conductive agent, were mixed according to a weight ratio of 98:1:1, added with N-methylpyrrolidone (NMP) as a solvent, and stirred under a vacuum state until the slurry was homogeneous. The resultant slurry was coated onto a 13 μm aluminum foil with a doctor blade, then oven-dried at 140°C, cold-pressed, and slitted to obtain a positive electrode plate with a positive electrode film layer, wherein the positive electrode film layer had an area density of 13.7 $mg/cm^2$.

(3) Electrolyte solution: in a glove box under an argon atmosphere ($H_2O$ < 0.1 ppm, $O_2$ < 0.1 ppm), organic solvents ethylene carbonate (EC)/ethyl methyl carbonate (EMC) were mixed uniformly in a volume ratio of 3/7, added with 12.5 wt% (based on the total weight of the solvents ethylene carbonate/ethyl methyl carbonate) of $LiPF_6$ for dissolution in the aforementioned organic solvents, and stirred uniformly to obtain an electrolyte solution. The relative dielectric constant of the electrolytic solution was 90.

(4) Separator: a commercially-available PP-PE copolymer microporous film with a thickness of 20 μm and an average pore size of 80 nm (available from Advanced Electronic Tech. Co., Ltd., model 20) was used.

(5) The positive electrode plate, the separator and the negative electrode plate were stacked in sequence, so that the separator was placed between the positive electrode plate and the negative electrode plate to play a role of isolation, and then they were wound to obtain a bare battery cell. The bare battery cell was placed in an outer package, injected with the aforementioned electrolyte solution and encapsulated, so as to obtain a secondary battery.

Preparation of half cell

The same negative electrode plate and electrolyte as those of the full battery, and a lithium plate as a counter electrode, were assembled into a button half cell.

Analysis and Detection

1. Adhesion force test for electrode plate

The adhesion force test was conducted by employing a peeling test method. (a)-(d) of Fig. 4 showed a flow chart of a peeling test. As shown in (a) of Fig. 4, firstly a steel plate 510 was provided, which had a dimension of 30 mm wide × 100 mm long. As shown in (b) of Fig. 4, then a piece of a double-sided adhesive tape 520 was provided. The double-sided adhesive tape 520 had a dimension of 20 mm wide × 30 mm long. The double-sided adhesive tape 520 was attached to the steel plate 510, with one wide edge of the double-sided adhesive tape 520 being aligned with one wide edge of the steel plate 510. As shown in (c) of Fig. 4 , then an electrode plate 530 to be tested was provided, and the electrode plate 530 to be tested had a dimension of 20 mm wide × 180 mm long. The electrode plate 530 to be tested was covered on the double-sided adhesive tape 520 (aligned on both sides), and the coated surface of the electrode plate 530 faced the double-sided adhesive tape 520. Since the length of the electrode plate 530 to be tested was greater than that of the double-sided adhesive tape 520, a part of the area of the electrode plate 520 to be tested was not adhered to the double-sided adhesive tape. As shown in (d) of Fig. 4, the steel plate 510 was fixed on a base of a tensile testing machine, the end of the electrode plate 530 to be tested that was not bonded with the double-sided adhesive tape was clamped with a clamp, and then the clamp was stretched towards the direction of the other end (a direction as indicated by an arrow), wherein the direction of the stretching force was perpendicular to the steel plate 510 and had a certain distance from the surface of the steel plate 510. While the electrode plate was stretched to be peeled off towards the outside of paper, the steel plate moved upwards to keep the stretching direction perpendicular to the stripping position of the electrode plate. During the stretching process, the stretching caused the electrode plate 530 to be gradually peeled off from the steel plate. During the stretching process, the stretching speed of the clamp was 50 mm/min. During the stretching process, the tensile force of the clamp was recorded, a length of 40 mm was continually peeled off after the tensile force was stable, and a average tensile force under this peeled length was taken as the adhesion force (in N).

2. Negative-electrode gram capacity (C)

At 2.5-4.3 V, a button battery was charged to 4.3 V according to 0.1 C, and then charged at a constant voltage of 4.3 V until the current was less than or equal to 0.05 mA, and allowed to stand for 5 min. Then the battery was discharged to 2.0 V according to 0.1 C, and the discharging capacity at this time was the initial gram capacity. The initial gram capacity

was divided by the weight of the positive electrode active material to obtain the positive electrode gram capacity.

3. Initial coulombic efficiency (ICE) of negative electrode

In an environment at 25°C and a normal pressure, a button battery was discharged to a voltage of 0.005 V at a 0.1 C-rate constant current, and then discharged to a voltage of 0.005 V at a 0.05 C-rate constant current, and a specific discharge capacity at this time was recorded as an initial lithiation capacity; and then the battery was charged to a voltage of 1.5 V at a 0.1 C-rate constant current, and a specific charge capacity at this time was recorded as an initial delithiation capacity. The button battery was subjected to a test of 50 charge-discharge cycles according to the aforementioned method, and the delithiation capacity was recorded each time.

$$\text{Initial coulombic efficiency (\%)} = \text{initial delithiation capacity/initial lithiation capacity} \times 100\%$$

5. Test of charging resistance

In the present application, the kinetic performance of the secondary battery was evaluated by 4C charging resistance at 25°C. At 25°C, the lithium-ion batteries prepared by the examples and comparative examples were discharged to a 50% capacity state, and allowed to stand for 30 min, and a voltage value V1 was recorded. The lithium-ion batteries were charged with a current A0 corresponding to a 4 C rate for 10 s, and a voltage value V2 corresponding to the end of charging was recorded. The manner of calculating the charging resistance was : R = (V2 - V1)/A0

The experimental results were normalized. Taking a resistance value of the charging resistor in Example 2 as a reference value of 100, the example was scaled proportionally.

4. Fast-charging cycle life/number of cycles

In the present application, the capacity retention performance of the secondary battery was evaluated by the fast-charging cycle life/number of cycles. At 25°C, the lithium-ion batteries prepared by the examples and comparative examples were charged at a rate of 2 C, discharged at a rate of 1 C, and subjected to a continuous cycling test in an interval of 3%-97% SOC until the capacity of the lithium-ion batteries were less than 80% of the initial capacity, and the number of cycles was recorded.

5. Test of relative dielectric constant

In the present application, the relative dielectric constants of the dielectric material particle and the electrolyte solution could be determined by a dielectric constant tester, specifically referring to GB/T5594.4-1985, and the instrument could be selected from a ZJD-C dielectric constant tester available from Beijing Zhonghang Times Instrument Equipment Co., Ltd.

6. Volume average particle diameter

The volume average particle diameter Dv50 was a meaning well known in the art, and could be determined by using an instrument and a method known in the art. For example, it could be conveniently determined with reference to GB/T 19077-2016 particle diameter analysis-Laser diffraction methods, by a laser particle diameter analyzer, such as the Mastersizer model 2000E laser particle diameter analyzer available from Malvern Instruments Co., Ltd., UK.

Table 1

| | Ratio of raw material component (wt%) | | | | Dielectric material particle:SBR Mass ratio | Barium titanate | | SBR Molecular weight | particle diameter ratio $D_1$:$D_2$ | Battery performance | | | | |
|---|---|---|---|---|---|---|---|---|---|---|---|---|---|---|
| Serial Number | Artificial graphite | Acetylene black | SBR-dielectric material particle | CMC | | Dv50/nm | Relative dielectric constant | | | Capacity of negative electrode mAh/g | ICE % | Charging resistance | Fast charge cycle Life/number of cycles | Binding force N/m |
| Comparative Example 1A | 97% | 1% | Without SBR-BTO SBR = 1% | 1% | None | None | None | 150 W | 50:1 | 350 | 90 | 110 | 900 | 12 |
| Comparative Example 1B | 97% | 1% | Without SBR-BTO with SBR = 0.95% with BTO = 0.05% | 1% | - | 50 | 90 | 150 W | 50:1 | 352 | 89 | 120 | 950 | 12.5 |
| Example 1 | 97% | 1% | SBR-BTO 1% | 1% | 0.5:100 | 50 | 90 | 150 W | 50:1 | 358 | 92% | 98 | 1300 | 11.8 |
| Example 2 | 97% | 1% | SBR-BTO 1% | 1% | 1:100 | 50 | 90 | 150 W | 50:1 | 356.5 | 91% | 100 | 1100 | 11.7 |
| Example 3 | 97% | 1% | SBR-BTO 1% | 1% | 3:100 | 50 | 90 | 150 W | 50:1 | 3830 | 89% | 105 | 1100 | 11.3 |
| Example 4 | 97% | 1% | SBR-BTO 1% | 1% | 5:100 | 50 | 90 | 150 W | 50:1 | 334 | 85% | 104 | 1200 | 11 |
| Example 5 | 97% | 1% | SBR-BTO 1% | 1% | 10:100 | 50 | 90 | 150 W | 50:1 | 325 | 88% | 110 | 1250 | 10.5 |
| Example 6 | 97% | 1% | SBR-BTO 1% | 1% | 3:100 | 100 | 90 | 100W | 50:1 | 330 | 88% | 110 | 1180 | 11.3 |
| Example 7 | 97% | 1% | SBR-BTO 1% | 1% | 3:100 | 200 | 90 | 100W | 50:1 | 320 | 89% | 111 | 1170 | 11.3 |
| Example 8 | 97% | 1% | SBR-BTO 1% | 1% | 0.5:100 | 50 | 90 | 200W | 50:1 | 332 | 88% | 120 | 1000 | 11.8 |

(continued)

| Serial Number | Ratio of raw material component (wt%) | | | | Dielectric material particle:SBR Mass ratio | Barium titanate | | SBR Molecular weight | particle diameter ratio $D_1:D_2$ | Battery performance | | | | |
|---|---|---|---|---|---|---|---|---|---|---|---|---|---|---|
| | Artificial graphite | Acetylene black | SBR-dielectric material particle | CMC | | Dv50/nm | Relative dielectric constant | | | Capacity of negative electrode mAh/g | ICE % | Charging resistance | Fast charge cycle Life/number of cycles | Binding force N/m |
| Example 9 | 97% | 1% | SBR-BTO 1% | 1% | 0.5:100 | 50 | 90 | 200W | 50:1 | 331 | 90% | 130 | 1200 | 11.7 |
| Example 10 | 97% | 1% | SBR-BTO 1% | 1% | 0.5:100 | 50 | 180 | 150 W | 50:1 | 358 | 92% | 110 | 1200 | 11.7 |
| Example 11 | 97% | 1% | SBR-PTO 1% | 1% | 0.5:100 | 50 | 90 | 150 W | 50:1 | 358 | 92% | 104 | 1200 | 11.1 |
| Example 12 | 97% | 1% | SBR-PPLN 1% | 1% | 0.5:100 | 50 | 90 | 150 W | 50:1 | 355 | 91% | 105 | 1240 | 11 |
| Example 13 | 97% | 1% | SBR-PZT 1% | 1% | 0.5:100 | 50 | 90 | 150 W | 50:1 | 354 | 92% | 108 | 1210 | 11 |
| Example 14 | 97% | 1% | SBR-BTO 1% CTDPP-138S | 1% | 0.5:100 | 50 | 90 | 150 W | 50:1 | 355 | 91% | 103 | 1140 | 11.5 |
| Example 15 | 97% | 1% | SBR-BTO 1% ET-DO-P-212S | 1% | 0.5:100 | 50 | 90 | 150 W | 50:1 | 354 | 91% | 103 | 1240 | 11.1 |

*SBR was the styrene butadiene rubber, CMC was sodium carboxymethyl cellulose, BTO was barium titanate, PTO was lead titanate, PPLN was lithium niobate, PZT was lead zirconate titanate, CTDPP-138S was bis(octyl pyrophosphate)oxyacetate titanate, and ETDOP-212S was ethylene glycol bis(dioctyl phosphate)titanate.

*SBR:BTO referred to the mass ratio of styrene butadiene rubber and barium titanate particles in the styrene butadiene rubber-barium titanate particle composite.

*The particle diameter ratio was $D_1:D_2$, which referred to the ratio of median particle diameter by volume of the negative electrode active material to the dielectric material particles.

It can be seen from the aforementioned experimental data that:
the negative electrode slurries of Examples 1-16 contain the novel composite material of the present application, and the composite material includes: the negative electrode active material (artificial graphite), the dielectric material particles (barium titanate particles); and the binder resin (styrene butadiene rubber); wherein, at least a part of the surface of the dielectric material particles is coated with a coupling agent (γ-mercaptopropyltrimethoxysilane), and the coupling agent bridges the dielectric material particles and the binder resin.

The dielectric material particle in the composite material of the present application is bridged on a binder resin through a coupling agent, which can bring about the following beneficial effects:

(1) The dielectric material particles are evenly dispersed in an electrode slurry and will not all settle at the bottom of the slurry.
(2) The dielectric material particles can be bonded to a surface of the negative electrode active material through the binder, and have a relatively closer distance from the surface of the negative electrode active material, so that it can fully exert a modification effect.
(3) The negative electrode active material will expand/shrink in volume during the charging and discharging process. During such a process, since the dielectric material particles are bridged on the binder resin, the dielectric material particles will not be fallen off along with the expand/shrink of the negative electrode active material, and will not lose contact with the negative electrode active material. The dielectric material particles can maintain stable contact with the negative electrode active material during the working process of the battery, and thus can stably exert a modification effect.

In terms of battery performance, the battery of the present application exhibits the following one or more performances:

(1) improved negative electrode capacity;
(2) improved first-week coulombic efficiency;
(3) reduced charging resistance; and
(4) a relatively longer cycle life.

It should be noted that the present application is not limited to the aforementioned embodiments. The aforementioned embodiments are only examples, and the embodiments that have substantially the same composition as the technical idea and exert the same effects within the scope of the technical solution of the present application are all included in the technical scope of the present application. Furthermore, without departing from the scope of the subject matter of the present application, various modifications that can come into the mind of those skilled in the art applied to the embodiments and other embodiments constructed by combining partial composition elements of the embodiments are also included in the scope of the present application.

## Claims

**1.** A composite material, comprising

a negative electrode active material;
a dielectric material particle; and
a binder;
wherein, at least a part of a surface of the dielectric material particle is covered with a coupling agent that bridges the dielectric material particle and the binder.

**2.** The composite material according to claim 1, wherein the binder binds the dielectric material particles onto the negative electrode active material.

**3.** The composite material according to claim 1, wherein the dielectric material particle has a relative dielectric constant of 80 to 200.

**4.** The composite material according to any one of claims 1-2, wherein the dielectric material is selected from one or more of the following: barium titanate, lead titanate, lithium niobate, lead zirconate titanate, lead metaniobate and lead barium lithium niobate.

5. The composite material according to any one of claims 1-4, wherein the binder is an organic binder.

6. The composite material according to any one of claims 1-5, wherein the binder is selected from one or more of the following: polyacrylic acid (PAA), styrene butadiene rubber (SBR), polyamide-imide (PAI), polyvinyl alcohol (PVA), polyethyleneimine (PEI), a polyimide binder (PI), and polytert-butyl acrylate-triethoxyvinylsilane (TBATEVS).

7. The composite material according to any one of claims 1-6, wherein the coupling agent is selected from one or more of the following: a silane coupling agent and a titanate coupling agent.

8. The composite material according to any one of claims 1-7, wherein the coupling agent is selected from one or more of a silane coupling agent KH590, a silane coupling agent KH550, a silane coupling agent KH560, a silane coupling agent KH570, a silane coupling agent KH792, a silane coupling agent DL602, a silane coupling agent DL171, a chelated type 100 titanate coupling agent, and a chelated type 200 titanate coupling agent.

9. The composite material according to any one of claims 1-8, which has one or more of the following properties

(1) the coupling agent is linked to the dielectric material through a first terminal functional group, and the first terminal functional group comprises -O-; and
(2) the coupling agent is linked to the binder through a second terminal functional group, and the second terminal functional group comprises -S-.

10. The composite material according to any one of claims 1-8, which has one or more of the following properties

(1) the coupling agent is linked to the dielectric material through a first terminal functional group, and the first terminal functional group comprises -Si-O-; and
(2) the coupling agent is linked to the binder through a second terminal functional group, and the second terminal functional group comprises -C-S-.

11. The composite material according to any one of claims 1-10, wherein the binder has a number average molecular weight of 1 million to 2 million.

12. The composite material according to any one of claims 1-11, wherein the dielectric material particle has one or more of the following properties:

(1) the dielectric material particle is a zero-dimensional particle;
(2) the dielectric material particle is a tetragonal barium titanate particle;
(3) the dielectric material particle has a median particle diameter by volume of 50 nm-200 nm;
(4) the negative electrode active material has a median particle diameter by volume of 4-10 $\mu$m; and
(5) a ratio of median particle diameter by volume of the negative electrode active material to the dielectric material particle is 200:1-20:1.

13. The composite material according to any one of claims 1-12, wherein a mass ratio of the dielectric material to the binder is 0.1:100-1:100.

14. A method for preparing a composite material, wherein the definition of the composite material is as described in any one of claims 1-13;
the preparation method comprising:

(1) subjecting a dielectric material particle to hydroxylation treatment to obtain a hydroxylated dielectric material particle;
(2) grafting a coupling agent on the hydroxylated dielectric material particle to obtain a dielectric material particle grafted with the coupling agent;
(3) linking the coupling agent grafted on the dielectric material particle to a binder through a condensation reaction; and
(4) mixing the product from the previous step with a negative electrode active material.

15. The method according to claim 14, wherein in the step (3), the coupling agent on the dielectric material particle contains a mercapto end group, the binder contains an alkenyl end group, and the coupling agent is linked to the binder

via a mercapto-alkenyl click chemical reaction.

**16.** The method according to claim 15, wherein the mercapto-alkenyl click chemical reaction is conducted under the action of a photoinitiator and ultraviolet light.

**17.** An electrode, comprising the composite material according to any one of claims 1-13.

**18.** A secondary battery, comprising the electrode according to claim 17.

**19.** An electrical apparatus, comprising the secondary battery according to claim 18.

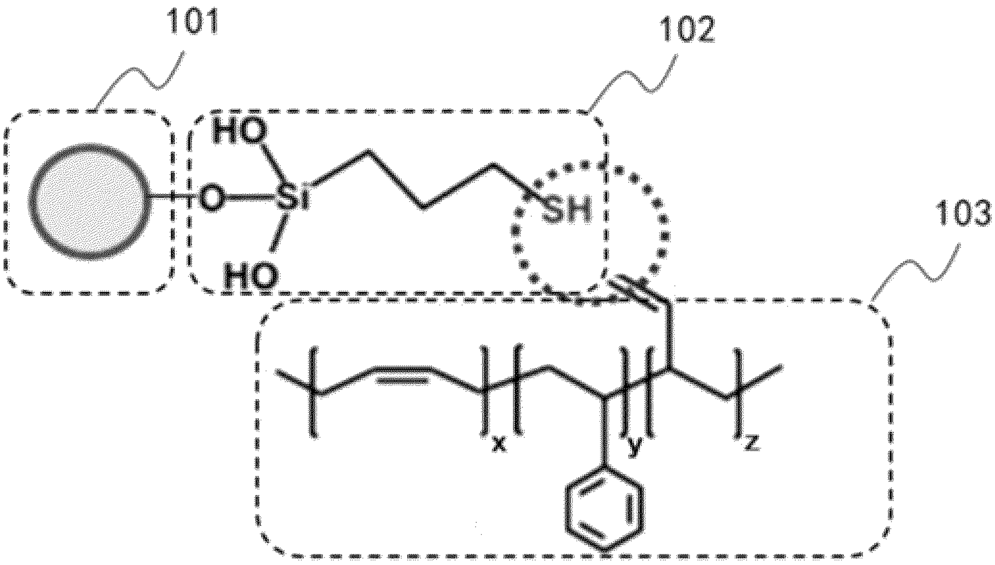

FIG. 1

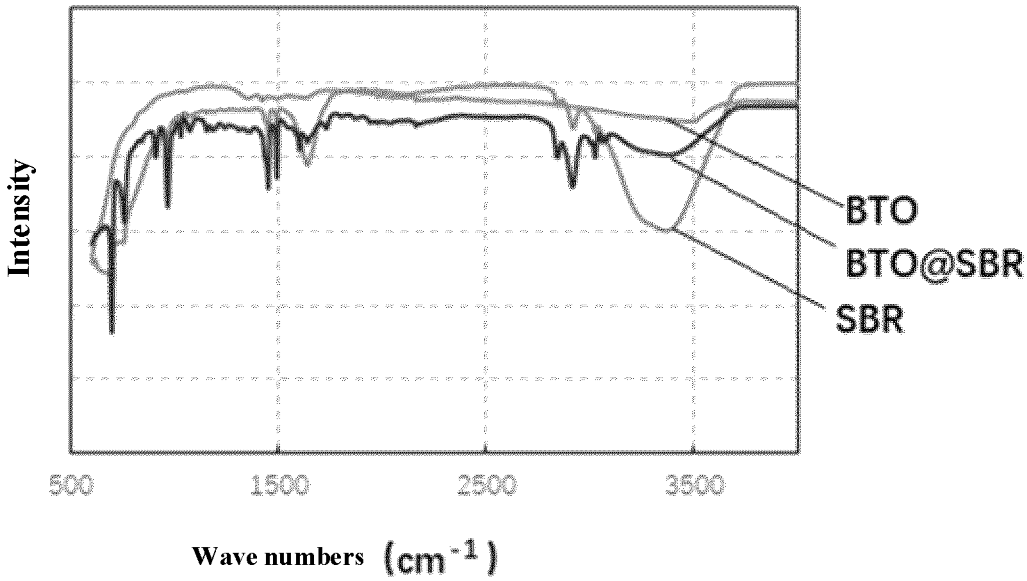
Intensity
500
1500
2500
3500
Wave numbers (cm-1)
BTO
BTO@SBR
SBR

FIG. 2

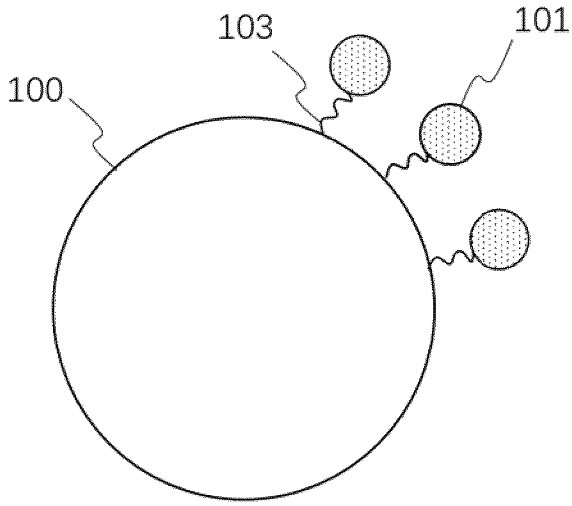


FIG. 3

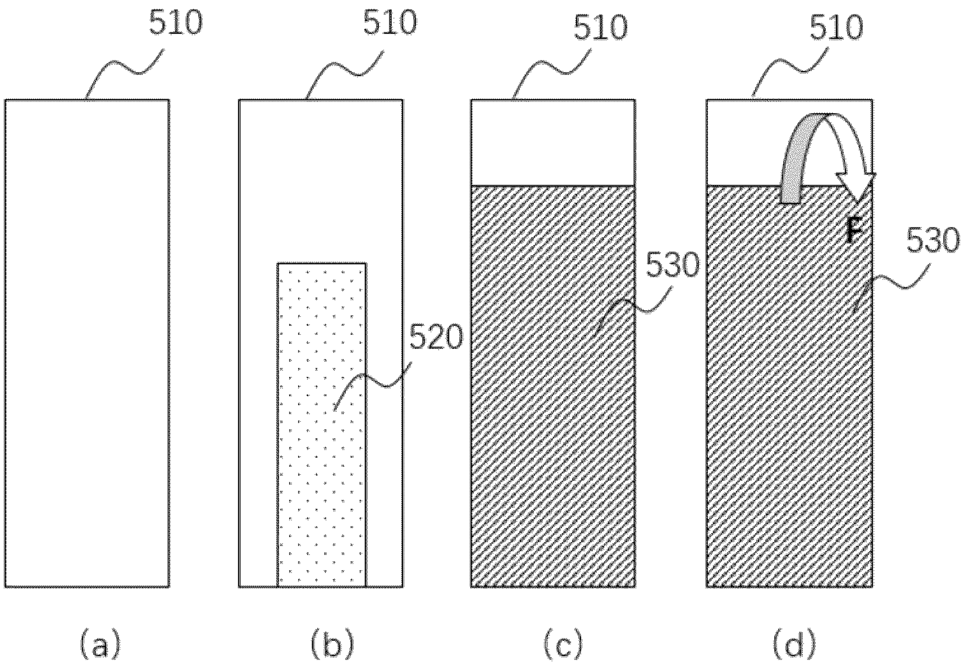


FIG. 4

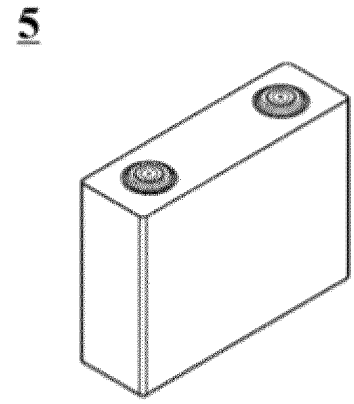


FIG. 5

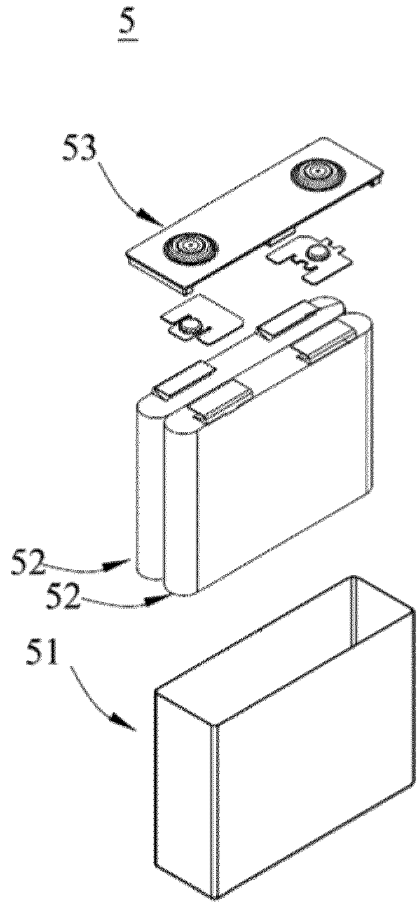


FIG. 6

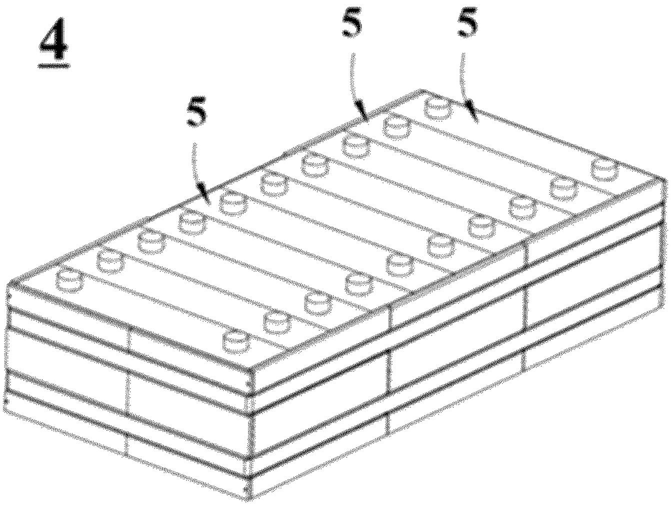


FIG. 7

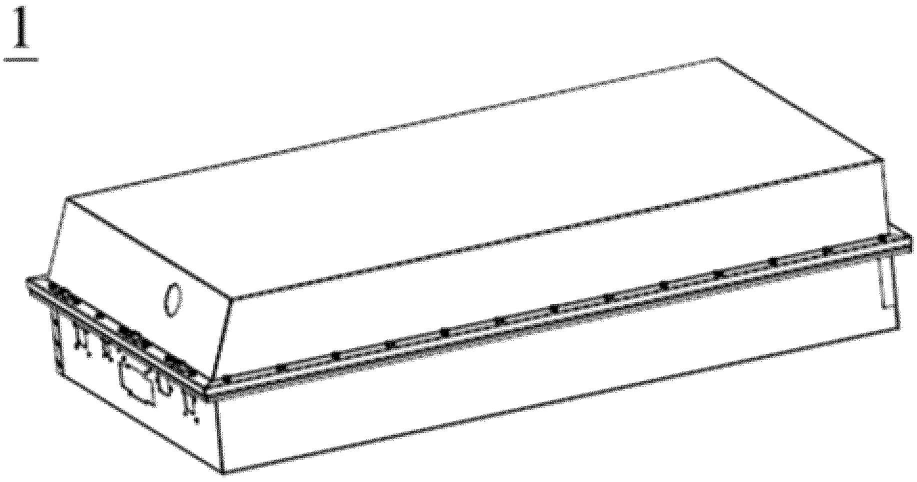


FIG. 8

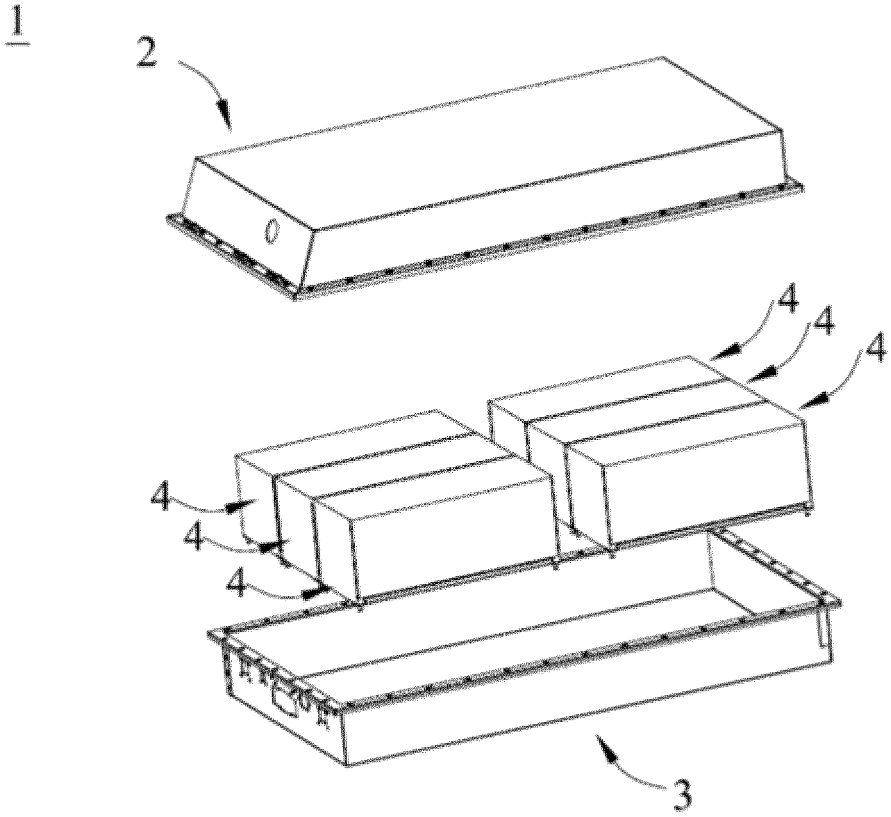


FIG. 9

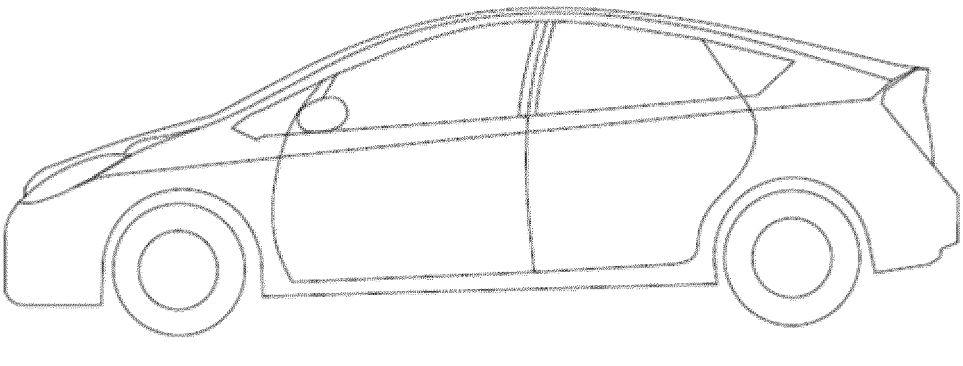

FIG. 10

**INTERNATIONAL SEARCH REPORT**

International application No.
**PCT/CN2022/104890**

**A. CLASSIFICATION OF SUBJECT MATTER**

H01M 4/36(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 负极, 阳极, 材料, 介电, 粘结剂, 偶联剂, battery, anode, material, dielectric, binder, silane, coupl+

**C. DOCUMENTS CONSIDERED TO BE RELEVANT**

| Category* | Citation of document, with indication, where appropriate, of the relevant passages | Relevant to claim No. |
|---|---|---|
| Y | CN 110299556 A (TOSHIBA CORP.) 01 October 2019 (2019-10-01)<br>description, paragraphs 38-148 and 225 | 1-19 |
| Y | CN 113745465 A (CHANGSHA RESEARCH INSTITUTE OF MINING AND METALLURGY CO., LTD.) 03 December 2021 (2021-12-03)<br>description, paragraphs 8-33 | 1-19 |
| Y | CN 111057489 A (GUANGZHOU HUANGPU ROCKTIN INDUSTRIAL COMPANY LTD.) 24 April 2020 (2020-04-24)<br>description, paragraphs 4-27 | 1-19 |
| A | US 2021288319 A1 (HONDA MOTOR CO., LTD.) 16 September 2021 (2021-09-16)<br>entire document | 1-19 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/104890**

| Patent document cited in search report | Publication date (day/month/year) | Patent family member(s) | Publication date (day/month/year) |
|---|---|---|---|
| CN 110299556 A | 01 October 2019 | US 2019296390 A1 | 26 September 2019 |
| | | EP 3544091 A1 | 25 September 2019 |
| | | JP 2019169252 A | 03 October 2019 |
| CN 113745465 A | 03 December 2021 | None | |
| CN 111057489 A | 24 April 2020 | None | |
| US 2021288319 A1 | 16 September 2021 | CN 113381020 A | 10 September 2021 |
| | | JP 2021144808 A | 24 September 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB T11297112015 A
- CN 114217139 A
- GB T559441985 A
- GB T190772016 A